# EUROPEAN PATENT SPECIFICATION

(11) **EP 2 125 648 B1**
(45) Date of publication and mention of the grant of the patent: **04.08.2010**
(21) Application number: 08701704.2
(22) Date of filing: 09.01.2008
(51) Int. Cl.: C03B 37/05

(54) **ARRANGEMENT AND METHOD FOR THE MANUFACTURE OF MINERAL FIBRES**
ANORDNUNG UND VERFAHREN ZUR HERSTELLUNG VON MINERALFASERN
DISPOSITIF ET PROCÉDÉ POUR LA FABRICATION DE FIBRES MINÉRALES

(30) Priority: 09.01.2007 FI 20070016
(43) Date of publication of application: 02.12.2009
(73) Proprietor: Paroc Oy Ab, 01300 Vantaa (FI)
(72) Inventor: LINDGREN, Tommy, FIN-20540 Turku (FI); ÅSTRAND, Erik, FIN-21600 Parainen (FI)
(74) Representative: Suominen, Kaisa Liisa
(86) International application number: PCT/FI2008/050004
(87) International publication number: WO 2008/084138

(56) References cited:
- EP-A- 0 367 194
- WO-A-90/15032
- WO-A-91/10626
- WO-A-92/12941
- WO-A-99/59929
- WO-A-2004/002913
- WO-A-2006/070056
- DE-A1- 2 223 683
- US-A- 4 433 992

## Description

The invention relates to an arrangement and a method for the manufacture of mineral fibres according to the preambles of the independent claims presented further below.

Mineral wool is manufactured by melting suitable mineral-rich raw materials, such as diabase, limestone or slag in a melting furnace. The obtained melt is led to a fiberising apparatus, where it is formed into mineral fibres. A cascade-type fiberiser can typically be used as a fiberising apparatus, which cascade-type fiberiser typically comprises four fiberising rotors which rotate around a horizontal or nearly horizontal axis. The axes of the fiberising rotors are typically arranged on different heights. Melt is fed to the mantle surface of the first fiberising rotor, to which a part of it adheres. The rest of the melt is thrown towards the mantle surface of the second fiberising rotor. Again a part of the melt gets a hold of the mantle surface of the second rotor and the rest of the melt is thrown towards the mantle surface of the third rotor. A part of the melt again adheres to the third mantle surface and the rest is thrown to the fourth mantle surface, where preferably the entire remaining melt mass gets a hold. The melt, which has gotten a hold of each of the rotors' mantle surface, is by means of centrifugal force formed into fibres, which detach from the melt circuits on the fiberising rotors. The detachment of the fibres, their trajectory after detachment and also their qualitative properties can be assisted by arranging air blows around the fiberising rotors, the force and the direction of which air blows can be used to make an impact on the afore-mentioned properties. The fibres are directed from the fiberising apparatus to a collecting means arranged in front of it, in the second end of the collecting chamber, for example to an inclined conveyor or a rotating drum. Binder is also generally added to the fibres prior to their collection, with the aid of which binder individual fibres are made to attach better to the fibre web obtained later in the process. The binder is most commonly added with the aid of nozzles arranged around the fiberising rotors.

Certain amounts of "waste material" are also generated in the manufacture of mineral wool. For example the edges of the fibre web can be tidied up by cutting after the hardening furnace. The cut-out edges contain ready mineral fibres of good quality, which are in principle completely usable. Such removed or otherwise rejected parts of the web can be disintegrated back into individual fibres or smallish fibre agglomerates for example by tearing. Ready-made fibres obtained in this way can be fed back into the process at a suitable point.

Typically the ready-made fibres have been fed back into the process with the aid of a supply tube or supply tubes arranged in the roof of the wool chamber. The problem has however been the uneven mixing of the ready-made fibres with the fresh fibres produced with the fiberising apparatus. The feeding of ready-made fibres has also disturbed the gas and fibre flows in the collecting chamber, and even caused harmful back eddies from the collecting member to the fiberising apparatus.

Publication DE 2 223 683 shows a fiberising apparatus, which comprises five rotating fiberising rotors. The fiberising apparatus is arranged diagonally, so that melt is fed to the fiberising rotor in the middle of the apparatus. Above and below this middle rotor are arranged in a symmetrical manner four fiberising rotors in such a way that the axes of the rotors are situated in the tips of a geometrical square. Nozzles for compressed air have been arranged as a circle around the fiberising rotors in order to bring the fibres to the collecting chamber. Outside the circle formed by the compressed air nozzles, on both sides of the fiberising device, nozzles are arranged in a row for feeding the fibres into the collecting chamber. The binder nozzles are arranged on the outside of these nozzles. One problem in an arrangement like this may be the poor mixing of the binder with the fresh fibres, and the general deterioration of the binder distribution in the final product. Problems may be caused also by the feeding of ready-made fibres very close to the air nozzles, which may cause uneven flows in the forming area of the fresh fibres. This may reduce the quality and amount of the formed fibres.

It is an aim of the present invention to reduce or even eliminate the above-mentioned problems, which appear in the prior art.

It is an aim of the present invention to provide an arrangement and a method, with which the adding of the ready-made fibres in the manufacture process of mineral wool to the mass of fresh fibres would be easy and simple.

Another aim of the present invention is an arrangement and a method, with the aid of which the desired distribution of the binder into the fibre web to be manufactured can be ensured and at the same time the formation of harmful flows in the collecting chamber can be minimized.

The above-mentioned disadvantages are eliminated or reduced, and the above-mentioned aims are attained with the present invention, which is characterized in what is defined in the characterising part of the independent claim presented further below.

Some preferred embodiments according to the invention are disclosed in the dependent claims presented further below.

A typical arrangement according to the invention for the manufacture of mineral fibres comprises
- a fiberising apparatus, which has at least two, typically three or more, fiberising rotors which rotate around a horizontal or nearly horizontal axis, onto the mantle surface of the first of which rotors mineral melt is fed, which mineral melt is thrown from the mantle surface of the first rotor to the mantle surface of the second rotor, and thence forward to the mantle surface of a possible subsequent rotor, whereby mineral fibres are formed at the active mantle surfaces of the rotors,
- blow-off means, which are arranged to surround the active mantle surfaces of the rotors of the fiberising apparatus and which are arranged in the immediate vicinity of the active mantle surfaces for blowing the fibres from the mantle surfaces towards a collecting means, which is arranged at a distance from the fiberising apparatus,
- addition means for ready-made fibres, with which means ready-made fibres are added to the mass of the fresh fibres formed at the mantle surfaces, and
- binder means, with which binder is added to the mixture of fresh fibres formed at the mantle surfaces and ready-made fibres,
   whereby the binder means are arranged in the immediate vicinity of the blow-off means and the addition means for the ready-made fibres are arranged on the side of the binder means, which is away from the blow-off means.

In a typical method according to the invention
- mineral melt is fed to the mantle surface of the first rotor of the fiberising apparatus, wherefrom the mineral melt is thrown to the mantle surface of the second rotor, and thence onwards to the mantle surface of a possible subsequent rotor, whereby mineral fibres are formed on the active mantle surfaces of the rotors, the fiberising apparatus comprising at least two, typically three or more, fiberising rotors which rotate around a horizontal or nearly horizontal axis,
- the formed fibres are blown from the active mantle surfaces of the rotors of the fiberising apparatus towards the collecting means, which is arranged at a distance from the fiberising apparatus, and blow-off means are used for the blowing, which blow-off means are arranged to surround the active mantle surfaces of the rotors of the fiberising apparatus and which are arranged in the immediate vicinity of the active mantle surfaces,
- ready-made fibres are added to the mass of the fresh fibres formed on the mantle surfaces with the aid of the addition means for ready-made fibres, and
- binder is added with binder means to the mixture of fresh fibres formed at the mantle surfaces and ready-made fibres,
whereby the binder means are arranged in the immediate vicinity of the blow-off means and the addition means for the ready-made fibres are arranged on the side of the binder means, which is away from the blow-off means.

Now it has surprisingly been found that when arranging the means, with which binder is added, to the immediate vicinity of the blow-off means and the addition means for ready-made fibres respectively outside these binder means, the binder distribution to the fibres can be significantly improved. The binder is distributed in a desired manner both to the ready-made fibres and to the fresh fibres, which have just been formed in the process. The achieved improvement has been clearly greater than what could have been expected from such a simple structural change. The binder distribution to the ready-made fibres has been especially improved, whereby the ready-made fibres do not reduce the mechanical strength properties of the fibre web obtained as a final product, which has earlier been a problem in certain product groups. The improved distribution of the binder to the ready-made fibres makes possible, if desired, the use of even larger amounts of ready-made fibres in the manufacturing process of mineral wool. It has further been noticed that when using the arrangement and method according to the invention the ready-made fibre is better "snatched" into the flow of fresh fibres departing from the fiberising rotors, in which case harmful flows, which go in different directions, are also not formed. It has also been noticed that, if desired, the total amount of added binder can also be increased, whereby the attachment of the ready-made fibres to the primary web to be formed can be improved.

In this context, fresh fibres means fibres, which are formed at the mantle surfaces of the fiberising rotors of the fiberising apparatus, and which immediately after being formed are guided with the aid of blowing towards a collecting member placed in front of the fiberising apparatus.

In this context, ready-made fibres means fibres, which have on time-scale been manufactured significantly earlier before their addition into the collecting chamber, and which are added into the manufacturing process using addition means, such as nozzles, supply tubes, supply gaps or the like. The ready-made fibres can be recycled fibres, i.e, they can originate from the parts of the mineral fibre web, which have been removed in later stages of the process, typically after the curing of the mineral fibre web, and which have been reduced back into individual fibres or smallish fibre groups or bunches. The ready-made fibres can also be another type of fibres than the fresh fibres manufactured in the process. The ready-made fibres can for example be glass fibres treated to be of a suitable length, while the fresh fibres in the process are stone wool fibres. The ready-made fibres can also be stone wool fibres, the chemical composition and/or length distribution of which is different from the corresponding properties of the fresh fibres manufactured in the process.

Typically ready-made fibres, especially recycled fibres obtained from the process, are added in an amount of 0.1-24, preferably 5-20, more preferably 7-16 percent by weight, calculated from the total amount of fibres.

According to an embodiment of the invention the addition means for the ready-made fibres comprise at least one supply tube, preferably 2-6 supply tubes, more preferably 2-3 supply tubes. The supply tubes are generally manufactured out of a wear-resistant material, such as stainless steel or basalt. The opening of the supply tube can be either round or angular. Normally the diameter of the opening of the supply tube, which functions as an addition means, is 60-160 mm, preferably 95-140 mm, more preferably 100-110 mm, sometimes 60-120 mm. The diameter of the supply tube needs to be sufficient, so that the ready-made fibres do not stick to the supply tube, but it cannot be too large, in order to prevent formation of disturbing flows in the process. Preferably the nozzle tip of the supply tube is designed to increase the air flow so that the diameter of the supply tube decreases before the nozzle tip slowly to the final diameter of the opening, in other words the supply tube is tapered towards the opening.

The addition means for the ready-made fibres are preferably aligned so that the ready-made fibres are fed in the direction of the main fibre flow, which is directed from the fiberising rotors towards the collecting member. Thus the formation of surplus, deviating flows in the collecting chamber can be minimized.

According to an embodiment of the invention the addition means for ready-made fibres are arranged on the side of the binder means which is away from the blow-off means, at a distance of 5-50, preferably 10-30 cm from the binder means.

Ready-made fibres are typically stored in a storage silo or the like before they are added into the process. From the storage silo the ready-made fibres can be led along one or more ducts, such as a conduit system, to the addition means for the ready-made fibres. For each addition means there can be arranged an own duct from the storage silo or the ready-made fibres can be brought using one duct to a distance from the fiberising apparatus and the collecting chamber. One duct can then be divided with a suitable branching piece/branching pieces, in order to attach the duct to each addition means. If an own separate duct is arranged from the storage silo for each addition means, the amount of ready-made fibres fed to different locations can easily be adjusted. The amount of ready-made fibre fed from each addition means does thus not need to be the same. In an embodiment of the invention separate addition means can also be used to lead ready-made fibres which differ from each other in regards to some property. When using one duct from the storage silo and a branching piece, a separate throttling device can be installed between the branching means and the addition means for adjusting the supplied amounts of ready-made fibres. Transfer blowers can for example be used for feeding the ready-made fibres from the storage silo.

In an embodiment of the invention the addition means for the ready-made fibres are arranged in the vicinity of the active mantle surfaces of the second and third rotor in the fiberising apparatus. Typically when using a four-rotor cascade-type fiberising apparatus the second and the third rotor produce quantitatively and qualitatively the best fibre material. If it is desired to mix the ready-made fibres with the main part of the fresh fibres, the addition means are preferably arranged in the vicinity of the second and the third rotor, at a distance of for example about 150-400, preferably about 100-300 mm from the mantle surface of the rotor, on its outside.

Sometimes in the method according to the invention the addition means for ready-made fibres can be arranged below the fiberising apparatus. In that case the addition means generally comprise only one supply tube or supply gap. Also when added like this, the mixing of the ready-made fibres with the fresh fibres can be clearly improved when compared to earlier solutions.

In a preferred embodiment of the invention the binder means are arranged in the immediate vicinity of the blow-off means. This means that the binder means are arranged very close to the blow-off means, even to an instant connection to the blow-off means. The binder means generally form a circle of binder means on the outside of the blow-off means, i.e. on the side which is away from the fiberising rotor, the distance from the blow-off means of which circle is 0-10 cm, typically 1-7 cm, more typically 2-5 cm. In an embodiment of the invention the binder means may have been arranged in the middle of the fiberising rotors, on the side of them which is towards the collecting chamber. Binder can also be added both from the binder means surrounding the mantle surfaces of the fiberising rotors and from the middle of the fibersing rotors.

The fiberising apparatus, blow-off means, binder means and addition means for ready-made fibres can, if desired, be integrated to form a uniform mobile unit. This unit thus comprises a fiberising apparatus, where the individual fiberising rotors have been attached to each other in an appropriate manner, so that the air flows around the rotors and preferably also between them can be arranged to be as streamlined as possible. Blow-off means can be attached to protective casings which surround the individual fiberising rotors. The blow-off means can comprise either a number of individual blow nozzles, which form a nozzle ring around the active mantle surfaces of the fiberising rotors, or the blow-off means may have been arranged as blowing gaps surrounding the active mantle surfaces of the fiberising rotors. These blowing gaps may have been divided with the aid of partitions into several separate blow openings. Binder means can be attached in the immediate vicinity of the blow-off means, which binder means normally comprise a number of separate nozzles. When the blow-off means comprise separate blow nozzles, the binder nozzles can be arranged in the same ring with the blow nozzles, for example so that every third nozzle in the ring is a binder nozzle, while the rest are blow nozzles. When the blow-off means are blowing gaps, the binder means can be arranged on the outer surface of the blowing gaps, i.e. on the side of them which is away from the fiberising rotors. The addition means for ready-made fibres are finally arranged on the outside of the binder means, i.e. on the side of them which is further away from the fiberising apparatus. Generally when the above-mentioned means are arranged to form a uniform mobile unit, wheels or the like are arranged underneath this unit, whereby the moving of the unit, for example during maintenance, is easy and light.

It is also possible that the fiberising apparatus, the blow-off means and the binder means are integrated to form a uniform mobile unit, and that the addition means for ready-made fibres are arranged separate from this unit, for example on external supports.

The binder means are preferably arranged in intimate contact with the blow-off means, on the side of the blow-off means which is away from the fiberising apparatus.

According to an embodiment of the invention the collecting member situated in front of the fiberising apparatus comprises a first and a second collecting surface, which are preferably arranged on top of each other in the vertical direction. The collecting member can comprise for example two rotating cylinders arranged on top of each other, the surface of which can be arranged to be air permeable, for example with perforations or gaps. Suction means can be arranged inside the cylinders for suctioning air and possible other gases from the collecting chamber. At the same time the fibres are collected with the aid of suction to the surface of the collecting members. The cylinders may rotate in the same direction or towards each other. Double collecting intensifies the collection of mineral fibres, which is preferred especially when a fiberising apparatus is used, the fibre production capacity of which is high. Usually the weight of the primary fibre web collected onto the collecting member is not allowed to exceed a certain given limit value. When the amount of fibres to be collected grows, either because a large amount of fibres can be manufactured with the fiberising apparatus, or because it is desired to add a significant amounts of ready-made fibres to the manufactured fibre web, it is generally necessary to increase the speed of the collecting member, so that the weight of the primary web stays below the given limit value. This may cause problems in a later stage of the manufacturing process, since it may not be possible to increase the speed of the subsequent processing stages equivalently. When using two collecting members the collecting capacity can be increased to such an extent that the weights of the collected primary webs remain below the given limit values without increasing the speed of the collecting members, even if the amount of fibre arriving at the collecting members increases significantly. A collecting member comprising two collecting surfaces is especially suitable for use when the addition means for ready-made fibres have been arranged in the vicinity of the active mantle surfaces of the second and third fiberising rotor.

In an embodiment of the invention the addition means for ready-made fibres or the blow-off means, which are situated in the vicinity of the addition means, can be aligned so that the ready-made fibres are directed mainly to the first or second collecting surface. Thus two primary fibre webs can be manufactured at the same time, the properties of which webs differ from each other. The addition means or the blow-off means in their vicinity can be aligned for example so that the main part of the ready-made fibres is collected onto the first collecting member and mainly fresh fibres are collected onto the second collecting member. The obtained different primary fibre webs can later be combined, whereby a final product is obtained, which can have for example different layers, or both primary webs can be processed separately in order to obtain two different final products.

In the following, the invention will be described in more detail with reference to the enclosed schematic drawings:

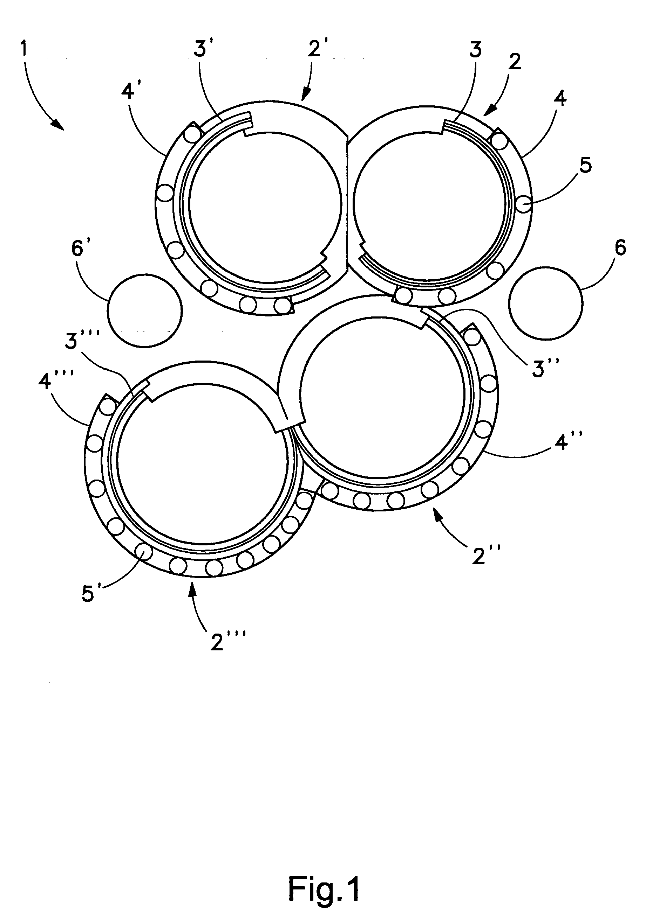

Figure 1 shows an arrangement according to the invention as seen from the front.

Figure 1 shows an arrangement according to the invention as seen from the front. The arrangement 1 comprises four fiberising rotors 2, 2', 2", 2"'. Blow-off means 3, 3', 3", 3'" have been arranged around the active mantle surfaces of the fiberising rotors 2, 2', 2", 2"', with which blow-off means the mineral fibres to be formed at the mantle surfaces are blown towards the collecting member (not shown) situated in front of the fiberising apparatus. The blow-off means 3, 3', 3", 3"' comprise a gap nozzle, with which air is blown at an average speed of 150-300 m/s.

Binder means 4, 4', 4", 4"', which comprise a number of round individual nozzles 5, 5', are arranged on the side of the blow-off means 3, 3', 3", 3'" which is away from the mantle surfaces. The number of individual nozzles of the binder means 4, 4',4", 4'" depends on which fiberising rotor 2, 2', 2", 2"' the binder means 4, 4', 4", 4'" surrounds. Since the least fibres are typically formed on the first fiberising rotor 2, also the supplied amount of binder is smaller at the active mantle surface of this rotor 2, whereby also the number of individual nozzles of the binder means 4 can be smaller. In a corresponding manner, the amount of formed fibres is larger on the third and fourth fiberising rotor 2", 2"', which naturally increases the need of supplied binder. Thus also the number of individual nozzles of the binder means 4", 4"' is preferably larger than at the first rotor 2.

Halfway in the first and third fiberising rotor 2, 2", outside their binder means, has been arranged an addition means 6 for ready-made fibres. A corresponding addition means 6' has been arranged on the other side of the fiberising apparatus, on average halfway in the second and the fourth fiberising rotor. The addition means 6, 6' for ready-made fibres comprise round nozzle openings, which are usually significantly larger that the individual nozzles meant for feeding binder. The addition means 6, 6' are preferably arranged in such a location around the fiberising rotors that as good a mixing as possible of the ready-made fibres with the fresh fibres can be ensured. Simultaneously it is aspired to add binder to the ready-made fibres as effectively as possible.

It is obvious to a man skilled in the art that the invention is not limited merely to the above-described examples but the invention may vary within the scope of the claims presented below.

## Claims

1. Arrangement for the manufacture of mineral fibres, which arrangement comprises
- a fiberising apparatus, which has at least two, typically three or more, fiberising rotors which rotate around a horizontal or nearly horizontal axis, onto the mantle surface of the first of which rotors mineral melt is fed, which mineral melt is thrown from the mantle surface of the first rotor to the mantle surface of the second rotor, and thence forward to the mantle surface of a possible subsequent rotor, whereby mineral fibres are formed at the active mantle surfaces of the rotors,
- blow-off means, which are arranged to surround the active mantle surfaces of the rotors of the fiberising apparatus and which are arranged in the immediate vicinity of the active mantle surfaces for blowing the fibres from the mantle surfaces towards a collecting means, which is arranged at a distance from the fiberising apparatus,
- addition means for ready-made fibres, with which means ready-made fibres are added to the mass of the fresh fibres which are formed at the mantle surfaces, and
- binder means, with which binder is added to the mixture of fresh fibres, which are formed at the mantle surfaces, and ready-made fibres,
**characterized in that**
the binder means are arranged in the immediate vicinity of the blow-off means and that the addition means for the ready-made fibres are arranged on the side of the binder means, which is away from the blow-off means.

2. Arrangement according to claim 1, **characterized in that** the addition means for the ready-made fibres comprise at least one supply tube, preferably 2-6 supply tubes, more preferably 2-3 supply tubes.

3. Arrangement according to claim 2, **characterized in that** the diameter of the supply tube, which functions as an addition means, is 60-160 mm, preferably 95-140 mm, even more preferably 100-110 mm.

4. Arrangement according to any of the preceding claims, **characterized in that** the addition means for the ready-made fibres are arranged in the vicinity of the active mantle surfaces of the second and third rotor of the fiberising apparatus.

5. Arrangement according to any of the preceding claims, **characterized in that** the addition means for the ready-made fibres are arranged below the fiberising apparatus.

6. Arrangement according to any of the preceding claims, **characterized in that** the fiberising apparatus, the blow-off means, the binder means and the addition means for the ready-made fibres are integrated to form a uniform mobile unit.

7. Arrangement according to any of the preceding claims, **characterized in that** the collecting means comprises a first and a second collecting surface, which are preferably arranged on top of each other in the vertical direction.

8. Arrangement according to claim 7, **characterized in that** the addition means for the ready-made fibres are directed so that the ready-made fibres are guided mainly onto the first or the second collecting surface.

9. Method for the manufacture of mineral fibres, in which method
- mineral melt is fed to the mantle surface of the first rotor of the fiberising apparatus, wherefrom the mineral melt is thrown to the mantle surface of the second rotor, and thence onwards to the mantle surface of a possible subsequent rotor, whereby mineral fibres are formed on the active mantle surfaces of the rotors, the fiberising apparatus comprising at least two, typically three or more, fiberising rotors which rotate around a horizontal or nearly horizontal axis,
- the formed fibres are blown from the active mantle surfaces of the rotors of the fiberising apparatus towards the collecting means, which is arranged at a distance from the fiberising apparatus, and blow-off means are used for the blowing, which blow-off means are arranged to surround the active mantle surfaces of the rotors of the fiberising apparatus and which are arranged in the immediate vicinity of the active mantle surfaces,
- ready-made fibres are added to the mass of the fresh fibres, which are formed on the mantle surfaces, with the aid of the addition means for ready-made fibres, and
- binder is added with binder means to the mixture of fresh fibres, which are formed at the mantle surfaces, and ready-made fibres,
**characterized in that**
the binder means are arranged in the immediate vicinity of the blow-off means and that the addition means for the ready-made fibres are arranged on the side of the binder means, which is away from the blow-off means.

10. Method according to claims 9, **characterized in that** ready-made fibres are added at least using as addition means at least one supply tube, preferably 2-6 supply tubes, more preferably 2-3 supply tubes.

11. Method according to any of the preceding claims 9-10, **characterized in that** the ready-made fibres are added from the vicinity of the active mantle surfaces of the second and third rotor of the fiberising apparatus.

12. Method according to any of the preceding claims 9-11, **characterized in that** the ready-made fibres are added from below the fiberising apparatus.

13. Method according to any of the preceding claims 9-12, **characterized in that** the fibres are collected with a collecting means, which comprises a first and a second collecting surface, which are preferably arranged on top of each other in the vertical direction.

14. Method according to claim 13, **characterized in that** the addition means for the ready-made fibres are directed so that the ready-made fibres are guided mainly onto the first or the second collecting surface.

15. Method according to any of the preceding claims 9-14, **characterized in that** the binder means arranged in the vicinity of the addition means for ready-made fibres feed more binder than in the other parts of the active mantle surfaces.

## Patentansprüche

1. Anordnung zur Herstellung von Mineralfasern, wobei die Anordnung Folgendes umfasst:
• eine Faserherstellvorrichtung, die zumindest zwei, typischerweise drei oder mehr, Rotoren zur Herstellung von Fasern aufweist, die sich um eine horizontale oder beinahe horizontale Achse drehen, wobei Mineralschmelze auf die Mantelfläche des ersten dieser Rotoren befördert wird und diese Mineralschmelze von der Mantelfläche des ersten Rotors auf die Mantelfläche des zweiten Rotors geschleudert wird, und dann weiter auf die Mantelfläche eines möglichen folgenden Rotors, wodurch auf den aktiven Mantelflächen der Rotoren Mineralfasern gebildet werden,
• Abblaseinrichtungen, die angeordnet sind, die aktiven Mantelflächen der Rotoren der Faserherstellvorrichtung zu umgeben, und die in der unmittelbaren Nähe der aktiven Mantelflächen angeordnet sind, um die Fasern von den Mantelflächen in Richtung einer Sammeleinrichtung zu blasen, die in einem Abstand zur Faserherstellvorrichtung angeordnet ist,
• Zufuhreinrichtungen für vorgefertigte Fasern, mit denen der Masse von frischen Fasern, die auf den Mantelflächen gebildet werden, vorgefertigte Fasern hinzugefügt werden, und
• Bindereinrichtungen, mit welcher der Mischung aus frischen Fasern, die auf den Mantelflächen gebildet werden, und vorgefertigten Fasern Bindemittel hinzugefügt wird,
**dadurch gekennzeichnet, dass**
die Bindereinrichtungen in der unmittelbaren Nähe der Abblaseinrichtungen angeordnet sind, und dass die Zufuhreinrichtungen für die vorgefertigten Fasern an der Seite der Bindereinrichtungen, die von den Abblaseinrichtungen entfernt ist, angeordnet sind.

2. Anordnung nach Anspruch 1, **dadurch gekennzeichnet, dass** die Zufuhreinrichtungen für die vorgefertigten Fasern zumindest ein Versorgungsrohr, vorzugsweise 2 - 6 Versorgungsrohre, mehr bevorzugt 2 - 3 Versorgungsrohre, umfassen.

3. Anordnung nach Anspruch 2, **dadurch gekennzeichnet, dass** der Durchmesser des Versorgungsrohrs, das als eine Zufuhreinrichtung fungiert, 60 - 160 mm beträgt, vorzugsweise 95 - 140 mm, noch mehr bevorzugt 100 - 110 mm.

4. Anordnung nach einem der vorhergehenden Ansprüche, **dadurch gekennzeichnet, dass** die Zufuhreinrichtungen für die vorgefertigten Fasern in der Nähe der aktiven Mantelflächen des zweiten und dritten Rotors der Faserherstellvorrichtung angeordnet sind.

5. Anordnung nach einem der vorhergehenden Ansprüche, **dadurch gekennzeichnet, dass** die Zufuhreinrichtungen für die vorgefertigten Fasern unter der Faserherstellvorrichtung angeordnet sind.

6. Anordnung nach einem der vorhergehenden Ansprüche, **dadurch gekennzeichnet, dass** die Faserherstellvorrichtung, die Abblaseinrichtungen, die Bindereinrichtungen und die Zufuhreinrichtungen für die vorgefertigten Fasern integral ausgebildet sind, um eine einheitliche mobile Einheit zu bilden.

7. Anordnung nach einem der vorhergehenden Ansprüche, **dadurch gekennzeichnet, dass** die Sammeleinrichtung eine erste und eine zweite Sammelfläche umfasst, die vorzugsweise in vertikaler Richtung übereinander angeordnet sind.

8. Anordnung nach Anspruch 7, **dadurch gekennzeichnet, dass** die Zufuhreinrichtungen für die vorgefertigten Fasern so ausgerichtet sind, dass die vorgefertigten Fasern hauptsächlich auf die erste oder die zweite Sammelfläche gelenkt werden.

9. Verfahren zur Herstellung von Mineralfasern, wobei bei diesem Verfahren
• Mineralschmelze auf die Mantelfläche des ersten Rotors der Faserherstellvorrichtung befördert wird, wovon die Mineralschmelze auf die Mantelfläche des zweiten Rotors geschleudert wird, und dann weiter auf die Mantelfläche eines möglichen folgenden Rotors, wodurch auf den aktiven Mantelflächen der Rotoren Mineralfasern gebildet werden, und wobei die Faserherstellvorrichtung zumindest zwei, typischerweise drei oder mehr, Rotoren zur Faserherstellung umfasst, die sich um eine horizontale oder beinahe horizontale Achse drehen,
• die gebildeten Fasern von den aktiven Mantelflächen der Rotoren der Faserherstellvorrichtung in Richtung der Sammeleinrichtung geblasen werden, die in einem Abstand zur Faserherstellvorrichtung angeordnet ist, und Abblaseinrichtungen für das Blasen verwendet werden, wobei diese Abblaseinrichtungen angeordnet sind, die aktiven Mantelflächen der Rotoren der Faserherstellvorrichtung zu umgeben, und in der unmittelbaren Nähe der aktiven Mantelflächen angeordnet sind,
• mit Hilfe von Zufuhreinrichtungen für vorgefertigte Fasern, vorgefertigte Fasern der Masse von frischen Fasern, die auf den Mantelflächen gebildet werden, hinzugefügt werden, und
• mit Bindereinrichtungen der Mischung aus frischen Fasern, die auf den Mantelflächen gebildet werden, und vorgefertigten Fasern Bindemittel hinzugefügt wird, **dadurch gekennzeichnet, dass**
die Bindereinrichtungen in der unmittelbaren Nähe der Abblaseinrichtungen angeordnet sind, und dass die Zufuhreinrichtungen für die vorgefertigten Fasern an der Seite der Bindereinrichtungen, die von den Abblaseinrichtungen entfernt ist, angeordnet sind.

10. Verfahren nach Anspruch 9, **dadurch gekennzeichnet, dass** vorgefertigte Fasern hinzugefügt werden, wobei als Zufuhreinrichtung zumindest ein Versorgungsrohr, vorzugsweise 2 - 6 Versorgungsrohre, mehr bevorzugt 2 - 3 Versorgungsrohre, verwendet werden.

11. Verfahren nach einem der vorhergehenden Ansprüche 9 - 10, **dadurch gekennzeichnet, dass** die vorgefertigten Fasern aus der Nähe der aktiven Mantelflächen des zweiten und dritten Rotors der Faserherstellvorrichtung hinzugefügt werden.

12. Verfahren nach einem der vorhergehenden Ansprüche 9 - 11, **dadurch gekennzeichnet, dass** die vorgefertigten Fasern von unterhalb der Faserherstellvorrichtung hinzugefügt werden.

13. Verfahren nach einem der vorhergehenden Ansprüche 9 - 12, **dadurch gekennzeichnet, dass** die Fasern mit einer Sammeleinrichtung gesammelt werden, die eine erste und eine zweite Sammelfläche umfasst, die vorzugsweise in vertikaler Richtung übereinander angeordnet sind.

14. Verfahren nach Anspruch 13, **dadurch gekennzeichnet, dass** die Zufuhreinrichtungen für die vorgefertigten Fasern so ausgerichtet sind, dass die vorgefertigten Fasern hauptsächlich auf die erste oder die zweite Sammelfläche gelenkt werden.

15. Verfahren nach einem der vorhergehenden Ansprüche 9 - 14, **dadurch gekennzeichnet, dass** die Bindereinrichtungen, die in der Nähe der Zufuhreinrichtungen für vorgefertigte Fasern angeordnet sind, mehr Bindemittel zuführen als in den anderen Teilen der aktiven Mantelflächen.

## Revendications

1. Dispositif destiné à la fabrication de fibres minérales, lequel dispositif comporte :
- un appareil de formation de fibres, lequel possède au moins deux, de façon typique trois ou davantage, rotors de fibrage qui tournent autour d'un axe horizontal ou presque horizontal, sur la surface de l'enveloppe du premier des rotors sur lequel le produit fondu minéral est fourni, lequel produit fondu minéral est projeté à partir de la surface de l'enveloppe du premier rotor vers la surface de l'enveloppe du second rotor, et, de ce fait, il progresse vers la surface de l'enveloppe d'un éventuel rotor suivant, de sorte que les fibres minérales sont formées au niveau des surfaces actives de l'enveloppe des rotors,
- des moyens de soufflage, lesquels sont organisés de façon à entourer les surfaces actives de l'enveloppe des rotors de l'appareil de fibrage et qui sont disposés au voisinage immédiat des surfaces actives d'enveloppe pour souffler les fibres à partir des surfaces d'enveloppe vers des moyens de collecte, lesquels sont disposés à une certaine distance de l'appareil de fibrage,
- des moyens d'addition destinés aux fibres prêtes à l'emploi, moyens avec lesquels les fibres prêtes à l'emploi sont ajoutées au volume des fibres fraiches qui sont formées au niveau des surfaces d'enveloppe, et
- des moyens de liant, par l'intermédiaire desquels un liant est ajouté au mélange des fibres fraîches, lesquelles sont formées au niveau des surfaces d'enveloppe, et des fibres prêtes à l'emploi,
**caractérisé en ce que**
les moyens de liant sont disposés au voisinage immédiat des moyens de soufflage et **en ce que** les moyens d'addition destinés aux fibres prêtes à l'emploi sont disposés sur le côté des moyens de liant, lequel se trouve à distance des moyens de soufflage.

2. Dispositif selon la revendication 1, **caractérisé en ce que** les moyens d'addition destinés aux fibres prêtes à l'emploi comportent au moins un tube d'alimentation, de préférence, 2 à 6 tubes d'alimentation, avec plus de préférence, 2 à 3 tubes d'alimentation.

3. Dispositif selon la revendication 2, **caractérisé en ce que** le diamètre du tube d'alimentation, lequel fonctionne en tant que moyen d'addition, est de 60 à 160 mm, de préférence de 95 à 140 mm, avec encore plus de préférence de 100 à 110 mm.

4. Dispositif selon l'une quelconque des revendications précédentes, **caractérisé en ce que** les moyens d'addition destinés aux fibres prêtes à l'emploi sont disposés au voisinage des surfaces actives de l'enveloppe des deuxième et troisième rotors de l'appareil de fibrage.

5. Dispositif selon l'une quelconque des revendications précédentes, **caractérisé en ce que** les moyens d'addition destinés aux fibres prêtes à l'emploi sont disposés au-dessous des l'appareil de fibrage.

6. Dispositif selon l'une quelconque des revendications précédentes, **caractérisé en ce que** l'appareil de fibrage, les moyens de soufflage, les moyens de liant et les moyens d'addition destinés aux fibres prêtes à l'emploi sont intégrés en vue de former une unité mobile uniforme.

7. Dispositif selon l'une quelconque des revendications précédentes, **caractérisé en ce que** les moyens de collecte comportent une première et une seconde surfaces de collecte, lesquelles sont, de préférence, disposées l'une au-dessous de l'autre dans la direction verticale.

8. Dispositif selon la revendication 7, **caractérisé en ce que** les moyens d'addition destinés aux fibres prêtes à l'emploi sont orientés de telle sorte que les fibres prêtes à l'emploi soient guidées principalement sur la première ou sur la seconde surface de collecte.

9. Procédé destiné à la fabrication de fibres minérales, procédé dans lequel :
- un produit fondu minéral est fourni à la surface de l'enveloppe du premier rotor de l'appareil de fibrage, à partir d'où le produit fondu minéral est projeté vers la surface de l'enveloppe du second rotor, et donc vers la surface de l'enveloppe d'un éventuel rotor suivant, de sorte que les fibres minérales sont formées sur les surfaces actives de l'enveloppe des rotors, le dispositif de fibrage comportant au moins deux, de façon typique trois ou davantage, rotors de fibrage qui tournent autour d'un axe horizontal ou pratiquement horizontal,
- les fibres formées sont soufflées à partir des surfaces actives de l'enveloppe des rotors de l'appareil de fibrage vers les moyens de collecte, lesquels sont agencés à une certaine distance de l'appareil de fibrage et des moyens de soufflage sont utilisés pour le soufflage, lesquels moyens de soufflage sont disposés en vue d'entourer les surfaces actives de l'enveloppe des rotors de l'appareil de fibrage et lesquels sont disposés au voisinage immédiat des surfaces actives de l'enveloppe,
- des fibres prêtes à l'emploi sont ajoutées au volume des fibres fraîches, lesquelles sont formées sur les surfaces de l'enveloppe, avec l'aide des moyens d'addition destinés aux fibres prêtes à l'emploi, et
- un liant est ajouté avec des moyens de liant au mélange de fibres fraîches, lesquelles sont formées au niveau des surfaces de l'enveloppe, et de fibres prêtes à l'emploi,
**caractérisé en ce que**
les moyens de liant sont disposés au voisinage immédiat des moyens de soufflage et **en ce que** les moyens d'addition destinés aux fibres prêtes à l'emploi sont disposés sur le côté des moyens de liant, lequel se trouve à distance des moyens de soufflage.

10. Procédé selon la revendication 9, **caractérisé en ce que** des fibres prêtes à l'emploi sont ajoutées en utilisant au moins comme moyens d'addition au moins un tube d'alimentation, de préférence 2 à 6 tubes d'alimentation, avec plus de préférence 2 à 3 tubes d'alimentation.

11. Procédé selon l'une quelconque des revendications précédentes 9 à 10, **caractérisé en ce que** les fibres prêtes à l'emploi sont ajoutées à partir du voisinage des surfaces actives de l'enveloppe des deuxième et troisième rotors de l'appareil de fibrage.

12. Procédé selon l'une quelconque des revendications précédentes 9 à 11, **caractérisé en ce que** les fibres prêtes à l'emploi sont ajoutées à partir du dessous de l'appareil de fibrage.

13. Procédé selon l'une quelconque des revendications précédentes 9 à 12, **caractérisé en ce que** les fibres sont collectées avec des moyens de collecte, lesquels comportent une première et une seconde surfaces de collecte, lesquelles sont disposées, de préférence l'une au-dessus de l'autre dans la direction verticale.

14. Procédé selon la revendication 13, **caractérisé en ce que** les moyens d'addition destinés aux fibres prêtes à l'emploi sont orientés de telle sorte que les fibres prêtes à l'emploi sont guidées principalement vers la première ou vers la seconde surface de collecte.

15. Procédé selon l'une quelconque des revendications précédentes 9 à 14, **caractérisé en ce que** les moyens de liant disposés au voisinage des moyens d'addition destinés aux fibres prêtes à l'emploi fournissent plus de liant que dans les autres parties des surfaces actives de l'enveloppe.
